# FASCICULE DE BREVET EUROPEEN

(11) **EP 2 499 903 B1**
(45) Date de publication et mention de la délivrance du brevet: **28.01.2015**
(21) Numéro de dépôt: 12159886.6
(22) Date de dépôt: 16.03.2012
(51) Int. Cl.: A01G 9/02

(54) **Pot de fleurs**
Blumentopf
Flower pot

(30) Priorité: 17.03.2011 FR 1152197
(43) Date de publication de la demande: 19.09.2012
(73) Titulaire: Etablissements Georges David, 01100 Oyonnax (FR)
(72) Inventeur: David, Hervé, 01100 Oyonnax (FR)
(74) Mandataire: Myon, Gérard Jean-Pierre

(56) Documents cités:
- EP-A1- 2 382 861
- AU-A- 7 422 381
- US-A- 3 935 672
- US-A- 4 715 144
- US-A1- 2004 177 553
- US-B1- 6 715 232

## Description

La présente invention a trait à un pot de fleurs.

On connait des pots de fleurs dont le fond comporte un trou qui permet l'évacuation du surplus d'eau d'arrosage. Ces pots de fleurs ne sont pas adaptés pour les plantes ayant des besoins en eau importants, puisque l'eau d'arrosage qui n'est pas absorbée par la terre est automatiquement évacuée par le trou.

On connait également des pots de fleurs à réserve d'eau qui comprennent généralement un bac dans lequel est disposée, au-dessus du fond, une cloison horizontale délimitant deux espaces distincts. La cloison horizontale comporte une multitude de trous permettant la communication entre les deux espaces. L'espace compris entre le fond et la cloison horizontale constitue une réserve d'eau qui peut être alimentée par l'extérieur par tous moyens. La cloison horizontale forme une grille permettant d'une part, la retenue de la terre et, d'autre part, la remontée de l'eau par capillarité. Si la réserve d'eau n'est pas alimentée, les pots de fleurs à réserve d'eau peuvent être utilisés pour des plantes ayant des besoins en eau faibles. Cependant, la géométrie des pots de fleurs à réserve d'eau est relativement complexe, ce qui rend leur fabrication relativement longue et couteuse par rapport aux pots de fleurs basiques.

US-B-6 715 232 divulgue un pot de fleurs dont le fond comporte un élément creux ouvert vers l'extérieur, prévu pour recouvrir l'extrémité d'un poteau. Le sommet de cet élément creux comporte une zone prévue pour être percée dans le but d'accrocher le pot de fleurs en hauteur sans endommager la paroi circonférentielle du pot de fleurs, lorsque l'utilisateur ne souhaite pas le poser sur un poteau. Autour de l'élément creux, le fond du pot de fleurs comporte des zones prévues pour être percées afin de drainer la plante. Ces zones sont initialement fermées pour empêcher le contenu du pot de fleurs de s'échapper, par exemple lors de son transport. Lorsque ces zones de drainage sont percées, la plante ne dispose pas de réserve d'eau. Par conséquent, ce pot de fleurs n'est pas adapté aux plantes ayant besoin de disposer en permanence d'une réserve d'eau d'arrosage.

C'est à ces inconvénients qu'entend plus particulièrement remédier l'invention en proposant un pot de fleurs de géométrie simple, facile à fabriquer et adapté à la fois aux plantes ayant des faibles besoins en eau et aux plantes nécessitant un arrosage important.

A cet effet, l'invention a pour objet l'utilisation d'un pot de fleurs telle que définie à la revendication 1.

Grâce à l'invention, lorsque l'utilisateur souhaite utiliser le pot de fleurs pour une plante qui n'a pas besoin de beaucoup d'eau, on perce la paroi du fond et l'eau d'arrosage est évacuée automatiquement. Au contraire, pour une plante ayant besoin de beaucoup d'eau, on perce l'élément creux, au dessus de la paroi, de sorte qu'une partie inférieure du volume intérieur, située entre la paroi et les trous percés dans l'élément creux, constitue un réservoir qui retient l'eau d'arrosage. Ainsi, le pot de fleurs conforme à l'invention convient à la fois pour des plantes nécessitant peu d'arrosage et des plantes ayant des besoins en eau importants.

Des aspects avantageux mais non obligatoires de l'utilisation d'un tel pot de fleurs sont spécifiés aux revendications dépendantes 2 à 14.

L'invention sera mieux comprise et d'autres avantages de celle-ci apparaîtront plus clairement à la lumière de la description qui va suivre d'un pot de fleurs conforme à l'invention, donnée uniquement à titre d'exemple et faite en référence aux dessins annexés dans lesquels :
- la figure 1 est une vue en perspective d'un pot de fleurs conforme à l'invention ;
- la figure 2 est une autre vue en perspective du pot de fleurs de la figure 1 ;
- les figures 3 et 4 sont respectivement des vues de dessus et de dessous du pot de fleurs de la figure 1 ;
- la figure 5 est une coupe selon le plan P5 à la figure 4 correspondant au détail V;
- la figure 6 est une coupe selon le plan P6 à la figure 3 ;
- la figure 7 est une vue en perspective du pot de fleurs de la figure 1 dans lequel est emboîté un second pot de fleurs identique ; et
- la figure 8 est une coupe selon le plan P8 à la figure 7.

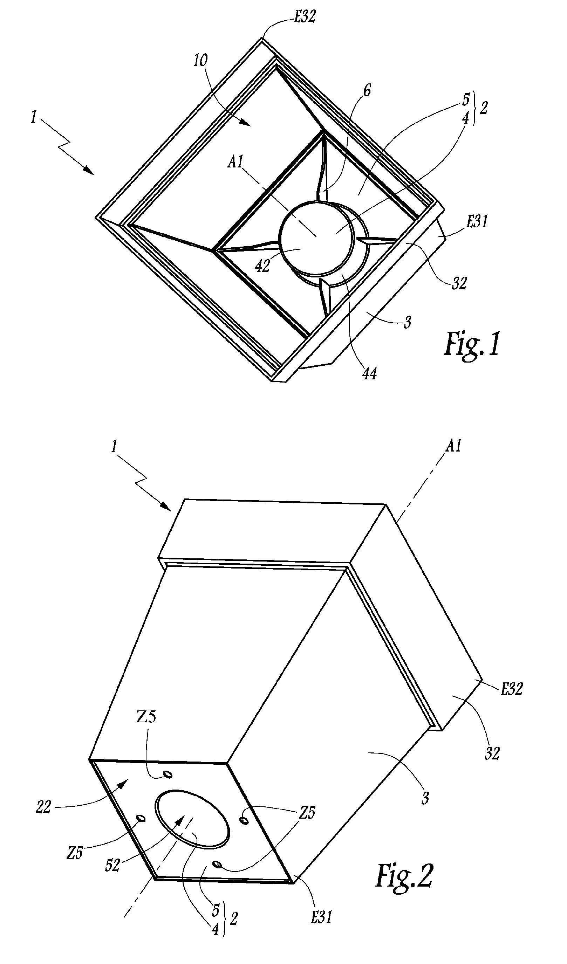

Les figures montrent un pot de fleurs 1 qui comprend un fond 2 et une jupe ou paroi latérale 3 de forme évasée, dont la section transversale augmente en s'éloignant du fond 2, autrement dit, en se rapprochant d'une ouverture 10 du pot de fleurs 1 permettant l'accès à un volume intérieur V1 du pot de fleurs 1. Le pot de fleurs 1 est en plastique moulé et est fabriqué par injection. A la figure 1, le pot de fleurs 1 est vu de dessus.

On note A1, un axe central longitudinal du pot de fleurs 1 qui est vertical lorsque le pot de fleurs 1 est posé sur une surface plane horizontale. La paroi latérale 3 est sensiblement centrée sur l'axe A1.

Dans la suite, la description est orientée en considérant que les termes « supérieur » et « haut » correspondent à une direction globalement parallèle à l'axe A1 et allant du fond 2 vers l'ouverture 10, tandis que les termes « inférieur » et « bas » correspondent à une direction opposée.

Lorsque le fond 2 du pot de fleurs 1 est posé sur une surface plane horizontale, les éléments inférieurs sont plus bas que les éléments supérieurs et inversement.

La paroi latérale 3 comprend, au niveau de son extrémité supérieure E32, une bande supérieure 32 qui forme une collerette dont la section transversale est plus grande que celle de la paroi latérale 3. L'extrémité supérieure E32 de la paroi latérale 3 définit l'ouverture 10. L'extrémité axiale inférieure E31 de la paroi latérale 3 est fermée par le fond 2.

Le fond 2 comprend une paroi inférieure 5 carrée et plane, adjacente et reliée à la paroi latérale 3. Le centre de la paroi inférieure 5 comporte un évidement 52 circulaire centré sur l'axe A1. En outre, le fond 2 comprend un plot 4 creux qui obstrue l'évidement 52 et qui fait saillie, à partir de la région centrale de la paroi inférieure 5, en direction de l'ouverture 10. Le plot 4 comprend une paroi latérale 44 tronconique d'axe A1. On note E41 l'extrémité axiale inférieure et de grand diamètre du plot 4, qui est adjacente et reliée à la paroi inférieure 5 du fond 2. L'extrémité axiale inférieure E41 est ouverte sur l'extérieur. On note E42, l'extrémité axiale supérieure et de petit diamètre du plot 4, qui est fermée par une paroi supérieure 42 plane et circulaire du plot 4, tournée vers l'ouverture 10 et parallèle à la paroi inférieure 5. Ainsi, la paroi supérieure 42 constitue une paroi de fermeture du plot 4.

On note V4, le volume intérieur du plot 4. Le volume V4 ne fait pas partie du volume intérieur V1 du pot de fleurs 1. Le plot 4 constitue une cloison de séparation entre le volume intérieur V1 du pot de fleurs 1 et le volume intérieur V4 du plot 4.

On note V2, une partie inférieure du volume intérieur V1, qui s'étend autour du plot 4, entre la paroi inférieure 5 du fond 2 et la paroi supérieure 42 du plot 4. Le long de l'axe A1, la partie inférieure V2 du volume V1 s'étend entre la paroi inférieure 5 du fond 2 et la paroi supérieure 42 du plot 4.Comme détaillé plus amplement dans la suite, la partie inférieure V2 du volume intérieur V1 constitue, dans certaines conditions, un réservoir d'eau.

Quatre nervures de renfort 6 identiques et globalement triangulaires sont chacune délimitées par trois bords 62, 64 et 66 dont le premier 62 et le second 64 sont respectivement reliés à la paroi inférieure 5 du fond 2 et à la paroi latérale 44 du plot 4. Les nervures 6 sont disposées en croix entre le plot 4 et la paroi latérale 3, chaque nervure 6 s'étendant selon une diagonale du fond 2, jusqu'à la paroi latérale 3. Le troisième bord 66 de chaque nervure 6 est libre et comprend une portion 68 adjacente à la paroi latérale 44 du plot 4 et parallèle à la paroi inférieure 5 du fond 2.

Lorsque le pot de fleurs 1 est posé sur une surface plane horizontale, par exemple le sol, la paroi inférieure 5 du fond 2, la paroi supérieure 42 du plot 4 et la portion 68 du bord libre 66 de chaque nervure 6 sont horizontales.

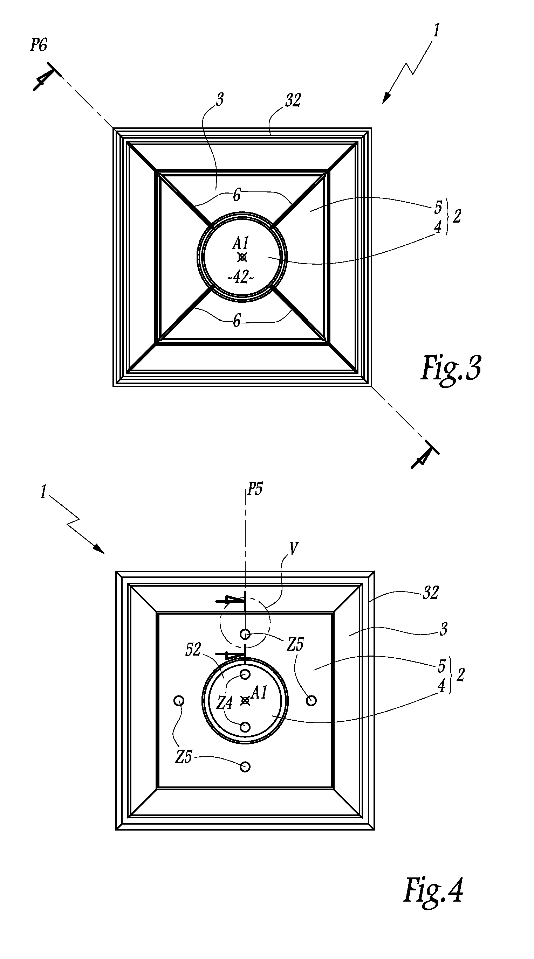

Comme le montrent les figures 2 et 4, la paroi inférieure 5 du fond 2 comporte quatre zones amincies Z5 et la paroi supérieure 42 du plot 4 comporte deux zones amincies Z4 qui, selon l'axe longitudinal A1, sont plus proches de l'ouverture 10 que les zones amincies Z5 de la paroi inférieure 5. Les zones amincies Z5 et Z4 sont circulaires. A la figure 1, les zones amincies Z4 et Z5 sont cachées à l'intérieur du pot de fleurs 1 et ne sont donc pas visibles. De préférence, la paroi inférieure 5 comporte entre 1 et 12 zones amincies Z5 et le plot 4 comporte entre 1 et 6 zones amincies Z4.

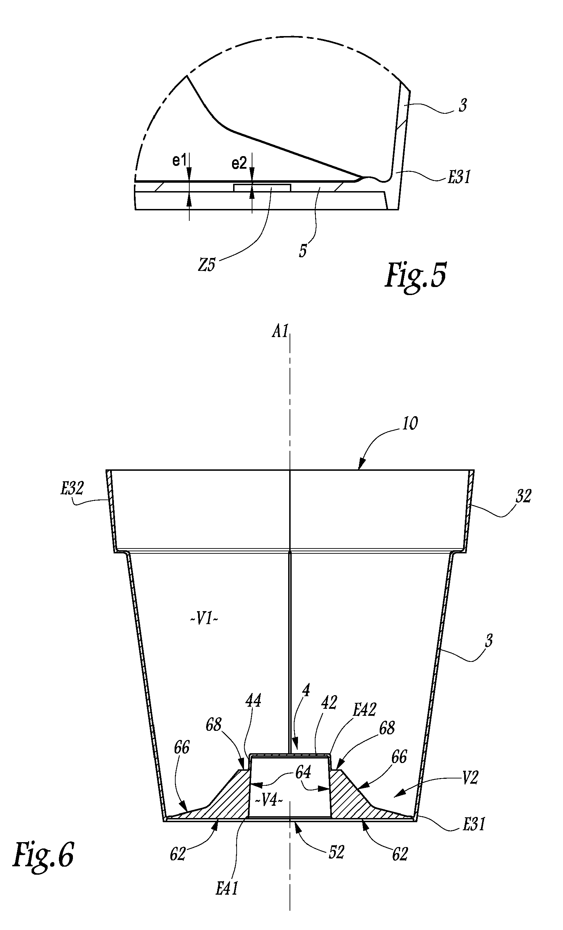

Comme visible à la figure 5, l'épaisseur e1 de la paroi inférieure 5 du fond 2 est plus importante que l'épaisseur e2 des zones amincies Z5 de la paroi inférieure 5. De la même manière, l'épaisseur e1 de la paroi supérieure 42 du plot 4 est plus importante que l'épaisseur e2 des zones amincies Z4 du plot 4. L'épaisseur e1 de la paroi supérieure 42 et de la paroi inférieure 5 est comprise entre 1 mm et 5 mm et l'épaisseur e2 des zones amincies Z4 et Z5 est comprise entre 0,1 mm et 2 mm. De préférence, l'épaisseur e1 de la paroi supérieure 42 et de la paroi inférieure 5 est comprise entre 3 mm et 3,5 mm et, de préférence, l'épaisseur e2 des zones amincies Z4 et Z5 est comprise entre 0,5 mm et 0,6 mm.

L'épaisseur e2 est adaptée pour que les zones amincies Z4 et Z5 puissent être facilement percées ou poinçonnées, par exemple à l'aide d'une perceuse, d'un outil pointu, ou en les impactant. Ainsi, les zones amincies Z4 et Z5 constituent des zones de perçage.

Il est prévu, avant l'utilisation du pot de fleurs 1, c'est-à-dire avant de remplir le volume intérieur V1 de terre et d'y installer une plante quelconque, de percer sélectivement les zones amincies Z4 ou les zones amincies Z5. Autrement dit, on ne perce pas à la fois la paroi inférieure 5 du fond 2 et le plot 4.

Lorsque l'utilisateur souhaite utiliser le pot de fleurs 1 pour une plante dont les besoins en eau sont faibles, il perce les zones amincies Z5 uniquement. Ainsi, en service, l'eau d'arrosage en surplus, non absorbée par la terre, est automatiquement évacuée par les ouvertures résultant du perçage des zones amincies Z5. Ces ouvertures permettent également de ventiler la terre contenue dans le pot de fleurs 1, en particulier au niveau du fond 2. L'eau n'est pas retenue dans le volume intérieur V1, en particulier dans la partie inférieure V2 du volume intérieur V1.

Lorsque l'utilisateur souhaite utiliser le pot de fleurs 1 pour une plante dont les besoins en eau sont importants, il perce les zones amincies Z4 uniquement. Ainsi, en service, lorsque l'utilisateur arrose la plante, de l'eau est retenue dans le réservoir constitué par la partie inférieure V2 du volume V1. Lorsque l'utilisateur arrose la plante de sorte qu'un surplus d'eau déborde au-delà de la partie inférieure V2 du volume intérieur V1, le surplus d'eau est évacué par les ouvertures résultant du perçage des zones amincies Z4, ce qui évite qu'il n'y ait trop d'eau dans le pot de fleurs 1.

Ainsi, grâce au perçage sélectif des zones amincies Z5 ou Z4, le pot de fleur 1 est à la fois adapté pour les plantes dont les besoins en eau sont faibles et importants. Par ailleurs, sa géométrie est relativement simple, ce qui rend sa fabrication aisée.

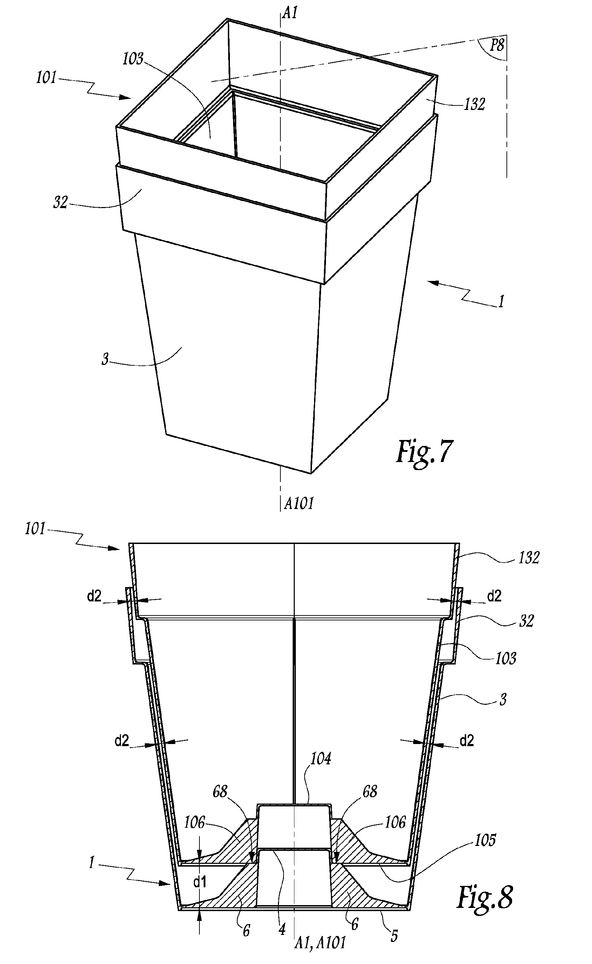

Les figures 7 et 8 montrent un second pot de fleur 101, identique au pot de fleurs 1, empilé à l'intérieur du pot de fleur 1. Les éléments du pot de fleur 101 similaires aux éléments du pot de fleurs 1 portent les mêmes références augmentées de 100.

Ainsi, le pot de fleurs 101, d'axe longitudinal A101, comporte un fond 102 ainsi qu'une paroi latérale 103 qui comprend une bande supérieure 132. Le fond 102 comprend une paroi inférieure 105 et un plot 104. Le plot 104 comprend une paroi latérale 144 tronconique et une paroi supérieure 142. En outre, le pot de fleurs 101 comprend quatre nervures 106.

La forme évasée des parois latérales 3 et 103 des pots de fleurs 1 et 101, ainsi que la forme tronconique des pots 4 et 104, permet d'imbriquer et empiler plusieurs pots de fleurs les uns dans les autres en alignant les axes longitudinaux A1 et A101 des pots de fleurs 1 et 101.

Dans la configuration des figures 7 et 8, la paroi inférieure 105 du pot de fleurs 101 repose sur la portion 68 du bord libre 66 de chaque nervure 6 du pot de fleurs 1. D'autre part, la paroi inférieure 5 du pot de fleurs 1 est parallèle à la paroi inférieure 105 du pot de fleurs 101. En outre, la paroi inférieure 105 du pot de fleurs 101 est séparée de la paroi inférieure 5 du pot de fleurs 1 d'une distance d1 non nulle, mesurée perpendiculairement aux parois inférieures 5 et 105.

D'autre part, les parois latérales 3 et 103 des pots de fleurs 1 et 101, y compris les bandes supérieure 32 et 132, sont séparées d'une distance d2 non nulle, mesurée perpendiculairement aux parois latérales 3 et 103. Dans la configuration des figures 7 et 8, les parois latérales 3 et 103 sont parallèles.

Ainsi, lorsque plusieurs pots de fleurs 1 et 101 sont empilés les uns dans les autres, par exemple pour leur stockage ou leur transport, il est aisé de les séparer les uns des autres car leurs parois latérales 3 et 103 ne sont pas en contact et n'adhèrent pas entre elles.

Par ailleurs, lorsque plusieurs pots de fleurs 1 et 101 sont empilés les uns dans les autres, leurs plots 4 et 104 s'imbriquent les uns dans les autres, ce qui permet de stabiliser la pile de pots de fleurs 1 et 101 empilés.

En variante non représentée, le pot de fleurs 1 ne comporte pas de zones amincies Z4 et Z5 et l'utilisateur perce comme il le souhaite la paroi inférieure 5 ou le plot 4. Dans ce cas, on pourra prévoir de repérer les zones à percer par un marquage, par exemple un relief ou un signe peint sur le pot de fleurs 1, notamment en forme de croix ou de cercle.

En variante non représentée, le fond 2 n'est pas carré mais de forme quelconque, par exemple circulaire, rectangulaire ou ovale. La forme de la paroi latérale est alors, par exemple, cylindrique ou conique à base circulaire, rectangulaire ou ovale.

En variante non représentée, le plot 4 n'est pas centré au milieu du fond 2. Par exemple, le plot 4 peut être adjacent à la paroi latérale 3. De plus, le plot 4 peut ne pas être tronconique. Par exemple, le plot 4 peut être annulaire et jouxter la paroi latérale 3. Dans ce cas, la partie inférieure V2 du volume intérieur V1 est cylindrique et est centré au milieu du fond 2. D'autre part, il peut y avoir plusieurs plots 4, par exemple répartis dans une zone centrale du fond 2 ou adjacents à la paroi latérale 3 et répartis à la périphérie de la paroi inférieure 5 du fond 2.

En outre, les différents modes de réalisation et les variantes décrites ci-dessus peuvent être combinés, totalement ou partiellement, pour donner d'autres modes de réalisation de l'invention.

## Revendications

1. Utilisation d'un pot de fleurs (1 ; 101) comprenant une jupe latérale (3 ; 103) qui est sensiblement centrée sur un axe longitudinal (A1 ; A101), l'extrémité axiale inférieure (E31) de la jupe latérale (3 ; 103) étant fermée par un fond (2 ; 102) et l'extrémité axiale supérieure (E32) de la jupe latérale (3 ; 103) définissant une ouverture (10) d'accès à un volume intérieur (V1) du pot de fleurs (1 ; 101), le fond (2 ; 102) comprenant une paroi (5 ; 105) et au moins un élément creux (4 ; 104) qui fait saillie, à partir de la paroi (5 ; 105) et le long de l'axe longitudinal (A1 ; A101), vers l'ouverture (10) du pot de fleurs (1 ; 101), une extrémité axiale supérieure (E42) de l'élément creux étant fermée et une extrémité axiale inférieure (E41) de l'élément creux (4 ; 104) étant ouverte sur l'extérieur, **caractérisée en ce qu'**on perce sélectivement la paroi (5 ; 105) ou l'élément creux (4 ; 104).

2. Utilisation d'un pot de fleurs (1 ; 101) selon la revendication 1, **caractérisée en ce qu'**on perce la paroi (5 ; 105) lorsque le pot de fleurs (1 ; 101) est utilisé pour une plante dont les besoins en eau sont faibles.

3. Utilisation d'un pot de fleurs (1 ; 101) selon la revendication 1, **caractérisée en ce qu'**on perce l'élément creux (4 ; 104) lorsque le pot de fleurs (1 ; 101) est utilisé pour une plante dont les besoins en eau sont importants.

4. Utilisation d'un pot de fleurs (1 ; 101) selon l'une des revendications 1 à 3, **caractérisée en ce qu'**on perce sélectivement la paroi (5 ; 105) ou l'élément creux (4 ; 104) avant de remplir le volume (V1) de terre.

5. Utilisation d'un pot de fleurs (1 ; 101) selon l'une des revendications précédentes, **caractérisée en ce que** la paroi (5 ; 105) ou l'élément creux (4 ; 104) est percé.

6. Utilisation d'un pot de fleurs (1 ; 101) selon l'une des revendications précédentes, **caractérisée en ce que** la paroi (5 ; 105) et l'élément creux (4 ; 104) comportent chacun au moins une zone amincie de perçage (Z4 ; Z5) et **en ce que** chaque zone amincie de perçage (Z4) de l'élément creux (4 ; 104) est plus proche de l'ouverture (10) que chaque zone amincie de perçage (Z5) de la paroi (5 ; 105).

7. Utilisation d'un pot de fleurs (1 ; 101) selon la revendication 6, **caractérisée en ce que** l'épaisseur (e2) des zones amincies de perçage (Z4 ; Z5) est comprise entre 0,1 mm et 2 mm, de préférence comprise entre 0,5 mm et 0,6 mm.

8. Utilisation d'un pot de fleurs (1 ; 101) selon l'une des revendications 6 ou 7, **caractérisée en ce que** les zones amincies de perçage (Z4 ; Z5) sont circulaires.

9. Utilisation d'un pot de fleurs (1 ; 101) selon l'une des revendications précédentes, **caractérisée en ce que** la paroi (5 ; 105) est agencée de manière adjacente à la jupe latérale (3 ; 103) et **en ce que** l'élément creux (4 ; 104) s'étend en saillie depuis la région centrale de la paroi (5 ; 105).

10. Utilisation d'un pot de fleurs (1 ; 101) selon l'une des revendications précédentes, **caractérisée en ce que** l'élément creux (4 ; 104) comprend, d'une part, une paroi latérale (44) tronconique dont l'extrémité axiale de grand diamètre (E41) est ouverte sur l'extérieur et agencée de manière adjacente à la paroi (5 ; 105) et, d'autre part, une paroi supérieure (42) qui obstrue l'extrémité axiale de petit diamètre (E42) de la paroi latérale (44).

11. Utilisation d'un pot de fleurs (1 ; 101) selon les revendications 6 et 10 prises ensembles, **caractérisé en ce que** chaque zone amincie de perçage (Z4) de l'élément creux (4 ; 104) est sur la paroi supérieure (42 ; 142) de l'élément creux (4 ; 104).

12. Utilisation d'un pot de fleurs (1 ; 101) selon l'une des revendications précédentes, **caractérisée en ce qu'**il est pourvu d'au moins une nervure de rigidification (6 ; 106) reliant la paroi (5 ; 105) à l'élément creux (4 ; 104).

13. Utilisation d'un pot de fleurs (1 ; 101) selon la revendication 12, **caractérisé en ce que** la paroi (5 ; 105) est carrée et **en ce que** le pot de fleurs (1 ; 101) est pourvu de quatre nervures de rigidification (6 ; 106) qui s'étendent le long des diagonales de la paroi (5 ; 105).

14. Utilisation d'un pot de fleurs (1) selon l'une des revendications 12 ou 13, **caractérisée en ce que** sa géométrie et ses proportions sont adaptées pour que plusieurs pots de fleurs (1 ; 101) identiques s'imbriquent les uns dans les autres et **en ce que** lorsqu'un second pot de fleurs (101) identique au pot de fleurs (1) est imbriqué dans le pot de fleurs (1), le fond (102) du second pot de fleurs (101) est en appui contre une partie (68) de la ou au moins une des nervures (6) du pot de fleurs (1), la jupe latérale (103) du second pot de fleurs (101) étant séparée par une distance (d2) non nulle de la jupe latérale (3) du pot de fleurs (1).

## Patentansprüche

1. Verwendung eines Blumentopfes (1; 101), der einen im Wesentlichen auf eine Längsachse (A1; A101) zentrierten seitlichen Mantel (3; 103) umfasst, wobei das axiale untere Ende (E31) des seitlichen Mantels (3; 103) von einem Boden (2; 102) verschlossen ist und das axiale obere Ende (E32) des seitlichen Mantels (3; 103) eine Öffnung (10) für den Zugang zu einem Innenvolumen (VI) des Blumentopfes (1; 101) definiert, wobei der Boden (2; 102) eine Wand (5; 105) und mindestens ein hohles Element (4; 104) aufweist, das von der Wand (5; 105) längs einer Längsachse (A1; A101) zur Öffnung (10) des Blumentopfes (1; 101) hervorragt, wobei ein axiales oberes Ende (E42) des hohlen Elements geschlossen ist und ein axiales unteres Ende (E41) des hohlen Elements (4; 104) nach außen offen ist, **dadurch gekennzeichnet, dass** selektiv die Wand (5; 105) oder das hohle Element (4; 104) durchbohrt wird.

2. Verwendung eines Blumentopfes (1; 101) nach Anspruch 1, **dadurch gekennzeichnet, dass** die Wand (5; 105) durchbohrt wird, wenn der Blumentopf (1; 101) für eine Pflanze verwendet wird, deren Wasserbedarf gering ist.

3. Verwendung eines Blumentopfes (1; 101) nach Anspruch 1, **dadurch gekennzeichnet, dass** das hohle Element (4; 104) durchbohrt wird, wenn der Blumentopf (1; 101) für eine Pflanze verwendet wird, deren Wasserbedarf groß ist.

4. Verwendung eines Blumentopfes (1; 101) nach einem der Ansprüche 1 bis 3, **dadurch gekennzeichnet, dass** selektiv die Wand (5; 105) oder das hohle Element (4; 104) vor dem Füllen des Volumens (V1) mit Erde durchbohrt wird.

5. Verwendung eines Blumentopfes (1; 101) nach einem der vorhergehenden Ansprüche, **dadurch gekennzeichnet, dass** die Wand (5; 105) oder das hohle Element (4; 104) durchbohrt ist.

6. Verwendung eines Blumentopfes (1; 101) nach einem der vorhergehenden Ansprüche, **dadurch gekennzeichnet, dass** die Wand (5; 105) und das hohle Element (4; 104) jeweils mindestens eine verdünnte Durchbohrungszone (Z4; Z5) aufweisen und dass jede verdünnte Durchbohrungszone (Z4) des hohlen Elements (4; 104) näher an der Öffnung (10) liegt als jede verdünnte Durchbohrungszone (Z5) der Wand (5; 105).

7. Verwendung eines Blumentopfes (1; 101) nach Anspruch 6, **dadurch gekennzeichnet, dass** die Dicke (e2) der verdünnten Durchbohrungszonen (Z4; Z5) zwischen 0,1 mm und 2 mm, vorzugsweise zwischen 0,5 mm und 0,6 mm liegt.

8. Verwendung eines Blumentopfes (1; 101) nach einem der Ansprüche 6 oder 7, **dadurch gekennzeichnet, dass** die verdünnten Durchbohrungszonen (Z4; Z5) kreisförmig sind.

9. Verwendung eines Blumentopfes (1; 101) nach einem der vorhergehenden Ansprüche, **dadurch gekennzeichnet, dass** die Wand (5; 105) in benachbarter Weise zu dem seitlichen Mantel (3; 103) angeordnet ist und dass das hohle Element (4; 104) sich von einem Mittelbereich der Wand (5; 105) hervorspringend erstreckt.

10. Verwendung eines Blumentopfes (1; 101) nach einem der vorhergehenden Ansprüche, **dadurch gekennzeichnet, dass** das hohle Element (4; 104) einerseits eine kegelstumpfförmige Seitenwand (44), dessen axiales Ende mit größerem Durchmesser (E41) nach außen offen ist und in benachbarter Weise zu der Wand (5; 105) angeordnet ist, und andererseits eine obere Wand (42), die das axiale Ende mit kleinem Durchmesser (E42) der Seitenwand (44) verschließt, umfasst.

11. Verwendung eines Blumentopfes (1; 101) nach den Ansprüchen 6 und 10 zusammengenommen, **dadurch gekennzeichnet, dass** jede verdünnte Durchbohrungszone (Z4) des hohlen Elements (4; 104) sich auf der oberen Wand (42; 142) des hohlen Elements (4; 104) befindet.

12. Verwendung eines Blumentopfes (1; 101) nach einem der vorhergehenden Ansprüche, **dadurch gekennzeichnet, dass** er mit mindestens einer Versteifungsrippe (6; 106) versehen ist, die die Wand (5; 105) mit dem hohlen Element (4; 104) verbindet.

13. Verwendung eines Blumentopfes (1; 101) nach Anspruch 12, **dadurch gekennzeichnet, dass** die Wand (5; 105) viereckig ist und dass der Blumentopf (1; 101) mit vier Verstärkungsrippen (6; 106) versehen ist, die sich entlang von Diagonalen der Wand (5; 105) erstrecken.

14. Verwendung eines Blumentopfes (1) nach einem der Ansprüche 12 oder 13, **dadurch gekennzeichnet, dass** seine Geometrie und seine Abmessungen angepasst sind, damit mehrere identische Blumentöpfe (1; 101) ineinander greifen, und dass, wenn ein zweiter Blumentopf (101) identisch zum Blumentopf (1) in den Blumentopf (1) eingesetzt wird, der Boden (102) des zweiten Blumentopfes (101) sich gegen einen Bereich (68) der oder mindestens einer Rippe (6) des Blumentopfes (1) abstützt, wobei der seitliche Mantel (103) des zweiten Blumentopfes (101) um einen Abstand (d2), der nicht null ist, von dem seitlichen Mantel (3) des Blumentopfs (1) getrennt ist.

## Claims

1. Use of a flower pot (1; 101) comprising a lateral skirt (3; 103) which is substantially centred on a longitudinal axis (A1; A101), the lower axial end (E31) of the lateral skirt (3; 103) being closed by a base (2; 102) and the upper axial end (E32) of the lateral skirt (3; 103) defining an opening (10) for access to an interior volume (V1) of the flower pot (1; 101), the base (2; 102) comprising a wall (5; 105) and at least one hollow element (4; 104) which projects, starting from the wall (5; 105) and along the longitudinal axis (A1; A101), towards the opening (10) of the flower pot (1; 101), an upper axial end (E42) of the hollow element being closed and a lower axial end (E41) of the hollow element (4; 104) being open towards the exterior, **characterised in that** the wall (5; 105) or the hollow element (4; 104) is pierced selectively.

2. Use of a flower pot (1; 101) according to claim 1, **characterised in that** the wall (5; 105) is pierced when the flower pot (1; 101) is used for a plant with a low requirement for water.

3. Use of a flower pot (1; 101) according to claim 1, **characterised in that** the hollow element (4; 104) is pierced when the flower pot (1; 101) is used for a plant which has a high requirement for water.

4. Use of a flower pot (1; 101) according to one of the claims 1 to 3, **characterised in that** the wall (5; 105) or the hollow element (4; 104) is pierced selectively before filling the volume (V1) with soil.

5. Use of a flower pot (1; 101) according to one of the preceding claims, **characterised in that** the wall (5; 105) or the hollow element (4; 104) is pierced.

6. Use of a flower pot (1; 101) according to one of the preceding claims, **characterised in that** the wall (5; 105) and the hollow element (4; 104) each comprise at least one thinned zone for piercing (Z4; Z5) and **in that** each thinned zone for piercing (Z4) of the hollow element (4; 104) is nearer the opening (10) than each thinned zone for piercing (Z5) of the wall (5; 105).

7. Use of a flower pot (1; 101) according to claim 6, **characterised in that** the thickness (e2) of the thinned zones for piercing (Z4; Z5) is between 0.1 mm and 2 mm, preferably between 0.5 mm and 0.6 mm.

8. Use of a flower pot (1; 101) according to one of the claims 6 or 7, **characterised in that** the thinned zones for piercing (Z4; Z5) are circular.

9. Use of a flower pot (1; 101) according to one of the preceding claims, **characterised in that** the wall (5; 105) is provided adjacent to the lateral skirt (3; 103) and **in that** the hollow element (4; 104) extends projecting from the central region of the wall (5; 105).

10. Use of a flower pot (1; 101) according to one of the preceding claims, **characterised in that** the hollow element (4; 104) comprises, on the one hand, a truncated lateral wall (44), the axial end with a large diameter (E41) of which is open towards the exterior and provided adjacent to the wall (5; 105) and, on the other hand, an upper wall (42) which obstructs the axial end with a small diameter (E42) of the lateral wall (44).

11. Use of a flower pot (1; 101) according to claims 6 and 10, taken together, **characterised in that** each thinned zone for piercing (Z4)
of the hollow element (4; 104) is on the upper wall (42; 142) of the hollow element (4; 104).

12. Use of a flower pot (1; 101) according to one of the preceding claims, **characterised in that** it is provided with at least one rib for rigidity (6; 106) which connects the wall (5; 105) to the hollow element (4; 104).

13. Use of a flower pot (1; 101) according to claim 12, **characterised in that** the wall (5; 105) is square, and **in that** the flower pot (1; 101) is provided with four ribs for rigidity (6; 106) which extend along the diagonals of the wall (5; 105).

14. Use of a flower pot (1) according to one of the claims 12 or 13, **characterised in that** the geometry and the proportions thereof are adapted so that a plurality of identical flower pots (1; 101) are nested in each other, and **in that**, when a second flower pot (101) which is identical to the flower pot (1) is nested in the flower pot (1), the base (102) of the second flower pot (101) rests against a part (68) of the, or at least one of the ribs (6) of the flower pot (1), the lateral skirt (103) of the second flower pot (101) being separated by a non-zero spacing (d2) from the lateral skirt (3) of the flower pot (1).
